(19) Europäisches Patentamt
European Patent Office
Office européen des brevets

(11) **EP 3 489 076 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **18020331.7**

(22) Anmeldetag: **13.07.2018**

(51) Int Cl.:
*B60L 53/64* *(2019.01)*    *B60L 53/63* *(2019.01)*
*B60L 53/67* *(2019.01)*    *H02J 7/00* *(2006.01)*
*H02J 7/04* *(2006.01)*    *G05F 1/67* *(2006.01)*

(54) **VERFAHREN UND SYSTEM ZUM BEREITSTELLEN EINES LADEPARKS MIT EINER MEHRZAHL VON LADEPUNKTEN**

METHOD AND SYSTEM FOR PROVIDING A LOAD PARK WITH A PLURALITY OF LOADING POINTS

PROCÉDÉ ET SYSTÈME DE FOURNITURE D'UN PARC DE CHARGE POURVU D'UNE MULTITUDE DE POINTS DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2017 DE 102017128092**

(43) Veröffentlichungstag der Anmeldung:
**29.05.2019 Patentblatt 2019/22**

(73) Patentinhaber: **Dr. Ing. h.c. F. Porsche AG 70435 Stuttgart (DE)**

(72) Erfinder: **Roggendorf, Christoph 71706 Markgröningen (DE)**

(56) Entgegenhaltungen:
EP-A2- 2 505 421        WO-A1-2013/026464
DE-A1-102015 110 023    DE-A1-102015 224 075
US-A1- 2015 314 696

• **Alfred Krenger: "Technisches Informationsblatt", , 13. März 2015 (2015-03-13), XP055559097, Gefunden im Internet: URL:https://web.archive.org/web/2016062010 4151/http://www.raustoc.ch/Media/KD-00043_ Trafo-Ueberlastbarkeit_de.aspx [gefunden am 2019-02-19]**
• **Stefan Tenbohlen ET AL: "Beurteilung der Überlastbarkeit von Transformatoren mit online Monitoringsystemen", Elektrizitätswirtschaft, vol. 99, 1 January 2000 (2000-01-01), pages 1-5, XP055726554,**

**Beschreibung**

Die vorliegende Erfindung betrifft ein Verfahren zum Bereitstellen eines Ladeparks mit einer Mehrzahl von Ladepunkten sowie ein System zum Versorgen eines Ladeparks mit einer Mehrzahl von Ladepunkten mit elektrischer Leistung.

Mit zunehmender Anzahl von Elektrofahrzeugen bzw. von Fahrzeugen mit elektrischem Antrieb steigt die Notwendigkeit, eine Ladeinfrastruktur für derartige Fahrzeuge auszubauen. Dies bedeutet, dass entlang von insbesondere stark befahrenen Verkehrsstraßen öffentlich zugängliche Ladeparks, insbesondere mit darin befindlichen Schnellladestationen, vorzusehen sind. Insbesondere eine Planung einer Schnellladeinfrastruktur und von dabei vorzusehenden sogenannten HPC (High Power Charging) Ladeparks ermöglicht eine drastische Verkürzung von an den Ladesäulen vorzunehmenden Ladevorgängen. Dazu ist es jedoch erforderlich, dass ein Anschluss über ein Mittelspannungsnetz auf mehr als 150 kW pro Ladepunkt bzw. Ladestation ausgelegt wird. Es ist vorgesehen, dass die Schnellladestationen mit 150 bis 350 kW oder mehr ausgestattet sind. In HPC Ladeparks wird dabei bereits ab zwei Ladepunkten bzw. Ladestationen in der Regel ein Anschluss über ein Mittelspannungsnetz notwendig. Für einen Anschluss mit derartig hohen bereitzustellenden Leistungen benötigt ein Betreiber des jeweiligen HPC Ladeparks einen entsprechenden Netzanschluss mit Leistung im Bereich von einigen MVA. Beim DC-Schnellladen werden Ladeströme von bis zu 500 A DC angefordert. Dadurch können Elektrofahrzeuge in wenigen Minuten aufgeladen werden. Das bedeutet, man versucht, die Ladezeiten durch erhöhte Leistungsübertragung zu minimieren, wobei jedoch die erhöhte Leistungsübertragung nicht allein von dem jeweiligen Ladeparkbetreiber-, sondern vielmehr auch von dem Betreiber des jeweiligen Mittelspannungsnetzes zur Verfügung zu stellen ist. Allerdings ist bereits heute die freie Verfügbarkeit an Leistungen in vielen Mittelspannungsnetzen stark eingeschränkt. Dabei plant ein jeweiliger Netzbetreiber eines jeweiligen Mittelspannungsnetzes immer mit einer statischen Dauerlast bei einer Gewährung von Netzzugängen. Ein Betreiber einer Ladeinfrastruktur bzw. eines Ladeparks muss jährlich für eine Bereitstellung einer Leistung durch den Netzbetreiber des jeweils ihn versorgenden Mittelspannungsnetzes einen sogenannten Leistungspreis bezahlen. Dieser liegt derzeit in Europa im Mittel bei rund 80 EUR/kVA. Die jährlichen Gebühren für HPC Ladeparks, d. h. für Ladeparks mit Schnellladepunkten, die jeweils eine Leistung von 350 kW oder mehr bereitstellen sollen, sind dadurch immens.

Zur Reduzierung der somit anfallenden Netzanschlusskosten werden Schnellladeparks bspw. mit einem sogenannten Gleichzeitigkeitsfaktor ausgelegt. Dabei wird davon ausgegangen, dass niemals zu einem gleichen Zeitpunkt an Ladepunkten des jeweiligen Ladeparks eine volle Leistung durch daran angeschlossene Fahrzeuge abgerufen wird. In. der Regel wird dabei auch eine in den Ladepark bzw. an den Ladepunkten vorzusehende Ladeelektronik mit einem entsprechenden Gleichzeitigkeitsfaktor implementiert. Sollte dennoch im Einzelfall an allen Ladepunkten eine volle Leistung benötigt werden, werden die jeweiligen an den einzelnen Ladepunkten vorzunehmenden Ladevorgänge abgeregelt, und eine entsprechende Ladezeit der daran angeschlossenen einzelnen Fahrzeuge verlängert sich entsprechend.

Aus der US 2014/0089016 ist ein zentralisiertes serverbasiertes System und eine Methode zum Verwalten und Reservieren von Parkplätzen, die in der Lage sind, ein Elektrofahrzeug aufzuladen, bekannt. Das beschriebene System behandelt Sätze von Parkplätzen als austauschbare, gepoolte Ressourcen, so dass ein Nutzer eines Elektrofahrzeugs eine Parkreservierung mit Auflagen buchen kann, indem er das Parken an einer gewünschten Stelle spezifiziert. Die vorgesehenen Parkplätze dienen wahlweise nur zum Parken oder zur Aufladung. Die Parkplätze werden dabei als gemeinsamer Parkraum gehandhabt, und jeder Stellplatz hat gleichberechtigten Zugang zu einer Ladestation. Der von dem System umfasste Server bestimmt die Verfügbarkeit der Ladekapazität innerhalb eines Parkzeitfensters, und der Nutzer eines jeweiligen Fahrzeugs kann eine Parkzeit bis zur maximalen Ladezeit wählen, die benötigt wird, um das Elektrofahrzeug aufzuladen.

Eine Ladestation zum Laden eines Plug-in-Kraftfahrzeugs an einer Ladesäule ist aus der Druckschrift DE 10 2015 110 023 A1 bekannt. Diese Ladestation weist einen Leistungstransformator und Gleichrichtermodule auf, die derart konfiguriert sind, dass die Gleichrichtermodule eine Niedergleichspannung abgeben, wenn der Leistungstransformator mit einer Mittelspannung gespeist wird.

Ein Verfahren zur Versorgung einer Mehrzahl an Fahrzeugen mit elektrischer Energie ist aus der Druckschrift DE 10 2015 224 075 A1 bekannt. Hierbei wird von einem Netzbetreiber ein Energiemengenkennwert bereitgestellt, der für eine durchschnittlich vorhandene Energiemenge repräsentativ ist, die zur Versorgung eines jeweiligen Fahrzeugs erforderlich ist.

Die Druckschrift US 2015/0 314 696 A1 beschreibt ein koordiniertes Steuerungsverfahren für ein Verteilernetzwerk mit verteilten Energiequellen und Ladestationen für Elektrofahrzeuge. Dabei wird von jeweiligen den verteilten Energiequellen bzw. den Ladestationen zugeordneten Steuereinheiten die von einem Energieversorgungsnetz entnommene Leistung protokolliert und die von dem Energieversorgungsnetz an das Verteilernetz abzugebende Energie eingeregelt.

Vor dem Hintergrund des Stands der Technik war es nunmehr eine Aufgabe der vorliegenden Erfindung, eine Ladeinfrastruktur bereitzustellen, welche es ermöglicht, kurzzeitig einen erhöhten Leistungsbedarf betriebskostenoptimiert zum Laden von Elektrofahrzeugen zur Verfügung zu stellen.

Eine Lösung der voranstehenden Aufgabe wird von einem Verfahren mit den Merkmalen von Patentanspruch 1 und einem System mit den Merkmalen von Patentanspruch bereitgestellt.

Ausgestaltungen des Verfahrens und des Systems gehen aus den jeweiligen Unteransprüchen und der nachfolgenden Beschreibung hervor.

Es wird ein Verfahren zum Bereitstellen eines Ladeparks mit einer Mehrzahl von Ladepunkten vorgeschlagen, bei dem alle Ladepunkte bzw. Ladestationen über einen gemeinsamen überlastfähigen Transformator an ein Mittelspannungsnetz angebunden werden. Dabei wird an jedem Ladepunkt eine Leistungselektronik vorgesehen, die dazu konfiguriert ist, einen Schnellladevorgang eines angeschlossenen und zu ladenden elektrisch angetriebenen Fahrzeugs durchzuführen. Ferner wird an einem dem überlastfähigen Transformator in Richtung Mittelspannungsnetz vorgeschalteten Verknüpfungspunkt eine von den Ladepunkten zu einem jeweiligen Zeitpunkt gemeinsam aus dem Mittelspannungsnetz bezogene Leistung zentral und kontinuierlich überwacht, wobei eine mittlere von den Ladepunkten gemeinsam aus dem Mittelspannungsnetz bezogene Energie über ein vorgegebenes Zeitintervall jeweils eingeregelt wird. Alternativ ist auch eine dezentrale Messung an den Ladepunkten möglich bzw. eine Kombination.

Ein Transformator ist generell ein statisches Gerät mit zwei oder mehr Wicklungen, das durch elektrische Induktion ein System von Wechselspannung und Wechselstrom, hier bezogen aus dem Mittelspannungsnetz, in der Regel mit verschiedenen Werten bei derselben Frequenz, zum Übertragen elektrischer Energie umwandelt. Grundsätzlich können Transformatoren unter Einhaltung einer höchst zulässigen Temperaturanhebung kurzzeitig mit höherer Leistung, d. h. in Überlast, betrieben werden, wenn eine vorhandene Dauerbelastung niedriger als 100 % war.

Vorzugsweise ist der erfindungsgemäße überlastfähige Transformator derart ausgestaltet, dass er im Schnitt mindestens 30 Minuten in Überlast betreibbar ist, wobei letzteres in der Regel abhängig ist von den herrschenden Temperaturverhältnissen im Bereich des Transformators und der Wärmekapazität des Transformators selbst.

Erfindungsgemäß wird als vorgegebenes Zeitintervall, über welches die mittlere von den Ladepunkten gemeinsam aus dem Mittelspannungsnetz bezogene Leistung eingeregelt wird, als ein Abrechnungsintervall eines Netzbetreibers des Mittelspannungsnetzes gewählt. Dabei kann sich in weiterer Ausgestaltung das vorgegebene Zeitintervall im Bereich von '5 bis 60 Minuten, insbesondere im Bereich von 10 Minuten bis 30 Minuten und weiter insbesondere von 15 Minuten handeln. Das bedeutet, dass ein Zeitintervall möglich ist, dessen Länge im Bereich von 5 Minuten, 6 Minuten, 7 Minuten, ...,30 Minuten liegt und dabei wahlweise insbesondere eine Länge von 15 Minuten beträgt.

Erfindungsgemäß wird die mittlere von den Ladepunkten gemeinsam aus dem Mittelspannungsnetz, bezogene Leistung über das vorgegebene Zeitintervall maximal auf eine festgelegte maximale Leistung eingeregelt. Das bedeutet, dass anhand der kontinuierlich überwachten von den einzelnen Ladepunkten gemeinsam aus dem Mittelspannungsnetz bezogenen Leistung zu einem jeweiligen Zeitpunkt innerhalb des vorgegebenen Zeitintervalls zu steuern ist, dass die mittlere von den Ladepunkten aus dem Mittelspannungsnetz bezogene Leistung über das gesamte vorgegebene Zeitintervall nur maximal die festgelegte maximale Leistung erreicht. Das bedeutet, dass im Falle, dass an Zeitpunkten zu Beginn des vorgegebenen Zeitintervalls eine die festgelegte maximale Leistung übersteigende Leistung gemeinsam von den Ladepunkten bezogen wird, an nachfolgenden Zeitpunkten innerhalb des vorgegebenen Zeitintervalls die gemeinsam bezogene Leistung aus dem Mittelspannungsnetz jeweils so herunterzuregeln ist, dass am Ende des vorgegebenen Zeitintervalls die mittlere über das gesamte vorgegebene Zeitintervall entnommene Leistung durch die Ladepunkte maximal die festgelegte maximale Leistung erreicht.

In weiterer Ausgestaltung wird als die für das vorgegebene Zeitintervall festgelegte maximale Leistung eine von Seiten eines Ladeparkbetreibers beantragte Netzanschlussleistung gewählt. Die von Seiten des Ladeparkbetreibers beantragte Netzanschlussleistung entspricht der Netzanschlussleistung, die der Ladeparkbetreiber von einem Betreiber des Mittelspannungsnetzes beantragt und von diesem zur Verfügung gestellt bekommt und dafür einen im Voraus festgelegten Preis entrichten muss. Der Preis, der zu entrichten ist, ist einer über ein bestimmtes Zeitintervall entnommenen Leistung zugeordnet, was bedeutet, dass innerhalb eines vorgegebenen Zeitintervalls eine festgelegte maximale Leistung nicht überschritten werden darf. Das dafür von einem Netzbetreiber des Mittelspannungsnetzes vorgegebene Zeitintervall beträgt in der Regel ca. 15 Minuten, innerhalb welchem eine ebenfalls von ihm vorgegebene bzw. von dem Ladeparkbetreiber beantragte Netzanschlussleistung festgelegt wird.

Das bedeutet, dass die von den Ladepunkten gemeinsam zu einem jeweiligen Zeitpunkt aus dem Mittelspannungsnetz bezogene Leistung zentral und kontinuierlich überwacht wird und in Abhängigkeit von der für das vorgegebene Zeitintervall vorgegebenen maximalen Leistung für die mittlere von den Ladepunkten gemeinsam aus dem Mittelspannungsnetz bezogene Leistung jeweils dynamisch eingestellt und auf die Mehrzahl von Ladepunkten nach von diesen jeweils angefordertem Bedarf verteilt wird.

Dadurch wird es möglich, dass in einem Teilintervall des vorgegebenen Zeitintervalls oder an einzelnen Zeitpunkten des vorgegebenen Zeitintervalls die gemeinsam von den Ladepunkten entnommene Leistung aus dem Mittelspannungsnetz die im Mittel maximal zulässige zu entnehmende Leistung überschreiten darf, solange die mittlere über das vorgegebene Zeitintervall entnommene Leistung die festgelegte maximale Leistung nicht übersteigt. Die dabei resultierende kurzzeitige Entnahme einer "Mehrleistung" wird ferner auch durch den überlastfähigen Transformator ermöglicht, der für diese Teilintervalle bzw. zu diesen Zeitpunkten kurzzeitig in Überlast betrieben wird. Da jedoch die Teilintervalle des vorgegebenen Zeitintervalls oder gar die einzelnen Zeitpunkte in der Regel unterhalb der Zeit liegen, in welcher der überlastfähige Transformator gemäß seiner Auslegung in Überlast betrieben werden darf, kann daraus keinerlei Gefahr für den Transformator bzw. für die damit in Verbindung stehende Umgebung entstehen.

In möglicher Ausgestaltung wird als überlastfähiger Transformator ein Transformator gewählt, der für minimal 30 Minuten in Überlast betreibbar ist.

In weiterer Ausgestaltung läuft bei Durchführung des erfindungsgemäßen Verfahrens eine Berechnung zur Bestimmung einer Überlastbarkeit des überlastfähigen Transformators online mit, und es werden zu einem jeweiligen Zeitpunkt freie Überlastkapazitäten des Transformators einer die jeweiligen Ladepunkte ansteuernden Steuereinheit mitgeteilt, so dass die die jeweiligen Ladepunkte ansteuernde Steuereinheit genau einstellen und regulieren kann, welche Leistung welchem Ladepunkt je nach Anforderungen von dessen Seite dem jeweiligen Ladepunkt zugeteilt wird. Dadurch wird sichergestellt, dass die jeweiligen Ladepunkte unter Berücksichtigung des Transformators und dessen Auslegung sowie unter Berücksichtigung der Anforderungen seitens des Mittelspannungsnetzes weitest möglich entsprechend den von den jeweiligen Ladepunkten angeforderten Leistungen versorgt werden können.

Erfindungsgemäß wird somit der Ladepark als ein Gesamtsystem betrachtet, und mittelspannungsseitig wird eine Gesamtleistungsaufnahme durch die Ladepunkte überwacht, alternativ auch dezentral. Durch den erfindungsgemäß vorgesehenen überlastfähigen Transformator sowie den vollen Ausbau aller Ladepunkte mit einer Ladeelektronik zur Bereitstellung einer vollen Leistung besteht die Möglichkeit, an jedem Ladepunkt gleichzeitig eine volle Leistung zur Verfügung zu stellen, solange dabei nur ein Teilintervall des vorgegebenen Zeitintervalls benötigt wird. Über die zentrale Überwachung an dem Netzverknüpfungspunkt wird die von den Ladepunkten gemeinsam entnommene Leistung aus dem Mittelspannungsnetz nicht mehr statisch auf die mit einem Gleichzeitigkeitsfaktor beantragte Netzanschlussleistung reduziert, sondern es wird eine mittlere Leistung über das vorgegebene Zeitintervall, erfindungsgemäß das Abrechnungsintervall des Netzbetreibers des Mittelspannungsnetzes, das in der Regel 15 Minuten beträgt, geregelt. Somit ist es möglich, kurzzeitig über die beantragte Netzanschlussleistung hinaus zu gehen, ohne weitere Gebühren zahlen zu müssen, wenn im Abrechnungsintervall insgesamt, d. h. im Mittel, die festgelegte maximale Leistung nicht überschritten wird. Da ein Schnellladen, d. h. ein Betrieb der jeweiligen Ladepunkte mit voller Leistung aufgrund der realen Ladekurven der jeweilig zu ladenden Fahrzeuge nur einige Minuten benötigt, können die an den jeweiligen Ladepunkten angeschlossenen Elektrofahrzeuge ohne Verlängerung der Ladezeit auch gleichzeitig voll geladen werden. Es wird ferner ein System zum Versorgen eines Ladeparks mit einer Mehrzahl von Ladepunkten mit elektrischer Leistung bereitgestellt. Dabei ist an jedem Ladepunkt eine Leistungselektronik vorgesehen, die dazu ausgelegt ist, einen Schnellladevorgang eines angeschlossenen und zu ladenden elektrisch angetriebenen Fahrzeugs durchzuführen. Das erfindungsgemäße System umfasst mindestens einen überlastfähigen Transformator, über den alle Ladepunkte an ein Mittelspannungsnetz ankoppelbar sind, eine erste Überwachungseinheit, die an einem über den Transformator in Richtung Mittelspannungsnetz vorgeschalteten Netzverknüpfungspunkt angeordnet ist und dazu konfiguriert ist, eine von den Ladepunkten zu einem jeweiligen Zeitpunkt gemeinsam aus dem Mittelspannungsnetz bezogene Leistung zentral und/oder dezentral und kontinuierlich zu überwachen, und eine Regeleinheit, die dazu ausgelegt ist, eine mittlere von den Ladepunkten gemeinsam aus dem Mittelspannungsnetz bezogene Leistung jeweils über ein vorgegebenes Zeitintervall einzuregeln.

Erfindungsgemäß ist die Regeleinheit dazu konfiguriert, die mittlere von den Ladepunkten gemeinsam aus dem Mittelspannungsnetz bezogene Leistung über das vorgegebene Zeitintervall maximal auf eine für das vorgegebene Zeitintervall festgelegte Leistung einzuregeln. Dabei handelt es sich, wie voranstehend bereits erwähnt, um eine von einem Netzbetreiber des Mittelspannungsnetzes vorgegebene maximale Leistung, die von einem Betreiber des Ladeparks von dem Betreiber des Mittelspannungsnetzes angefordert und entsprechend auch vertragsmäßig bezahlt wird.

In weiterer Ausgestaltung des erfindungsgemäßen Systems ist der überlastfähige Transformator ein Transformator, der so ausgelegt ist, dass er minimal 30 Minuten in Überlast betreibbar ist. Dabei ist sowohl seine Wärmekapazität als auch die bei Betrieb herrschenden Temperaturen zu berücksichtigen.

Das erfindungsgemäße System umfasst in weiterer Ausgestaltung eine Steuereinheit, die dazu konfiguriert ist, die jeweiligen Ladepunkte des Ladeparks anzusteuern und die über den Transformator aus dem Mittelspannungsnetz bereitgestellte elektrische Leistung auf die Mehrzahl von Ladepunkten in Abhängigkeit von einem von diesen jeweils angeforderten Bedarf zu verteilen.

In weiterer Ausgestaltung umfasst das erfindungsgemäße System eine zweite Überwachungseinheit, die dazu konfiguriert ist, ein Berechnungsverfahren zur Bestimmung einer Überlastbarkeit des überlastfähigen Transformators bei Betrieb des Transformators online durchzuführen und zu einem jeweiligen Zeitpunkt freie Übertragungskapazitäten des Transformators der die jeweiligen Ladepunkte ansteuernden Steuereinheit mitzuteilen, so dass die Steuereinheit in der Lage ist, in Abhängigkeit von den hier übermittelten freien Übertragungskapazitäten des Transformators die gemeinsam entnommene Leistung den jeweiligen Ladepunkten bzw. Ladestationen zuzuteilen.

Das erfindungsgemäße System ist insbesondere dazu ausgestaltet, das voranstehend beschriebene erfindungsgemäße Verfahren auszuführen.

Es ist denkbar, dass die von dem erfindungsgemäßen System umfasste erste Überwachungseinheit und die die jeweiligen Ladepunkte des Ladeparks ansteuernde Steuereinheit in einer Einheit zusammengefasst sind und demnach sowohl an den Netzanknüpfungspunkt als auch mit den einzelnen Ladepunkten in technisch kommunikativer Verbindung stehen. Alternativ dazu ist es jedoch auch denkbar, dass die erste Überwachungseinheit und die Steuereinheit voneinander separate Einheiten bilden, jedoch drahtgebunden oder drahtlos in kommunikativer Verbindung miteinander stehen, um darüber Daten austauschen zu können, so dass die Steuereinheit aufgrund der von der ersten Überwachungseinheit übermittelten Daten bezüglich der gemeinsam entnommenen Leistung der jeweiligen Ladepunkte die jeweiligen Ladepunkte geeignet ansteuern und entsprechend mit jeweiliger Leistung versorgen kann.

Weitere Vorteile und Ausgestaltungen der Erfindung ergeben sich aus der Beschreibung und der beiliegenden Zeichnung.

Die Erfindung ist anhand einer Ausführungsform in der Zeichnung schematisch dargestellt und wird unter Bezugnahme auf die Zeichnung ausführlich beschrieben.

Figur 1 zeigt in schematischer Darstellung eine Ausführungsform des erfindungsgemäßen Systems zur Verwendung einer Ausführungsform des erfindungsgemäßen Verfahrens.

Figur 2 zeigt anhand eines schematischen Diagramms in einer Ausführungsform des erfindungsgemäßen Verfahrens, wie eine Mehrzahl von Ladepunkten eines Ladeparks mit elektrischer Ladung versorgt werden.

Die Figuren werden zusammenhängend und übergreifend beschrieben, gleichen Komponenten sind dieselben Bezugszeichen zugeordnet.

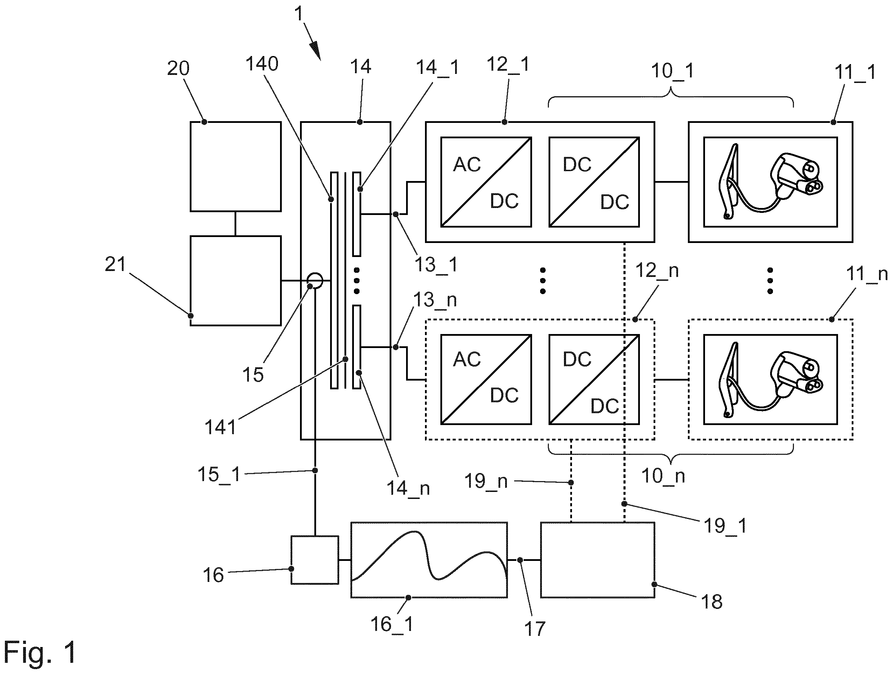

Figur 1 zeigt eine Ausführungsform des erfindungsgemäßen Systems 1. Das erfindungsgemäße System 1 ist dazu ausgestaltet, eine Mehrzahl von Ladepunkten 10_1, ..., 10_n mit elektrischer Leistung zu versorgen. Jeder hier dargestellte Ladepunkt 10_1, ..., 10_n ist mit einer Leistungselektronik 12_1, ..., 12_n ausgestattet, die dazu ausgelegt ist, einen Schnellladevorgang eines angeschlossenen und zu ladenden elektrisch angetriebenen Fahrzeugs durchzuführen. Ein zu ladendes elektrisch angetriebenes Fahrzeug ist dabei über eine jeweilige einer jeweiligen Leistungselektronik 12_1, ..., 12_n eines Ladepunkts 10_1, ..., 10_n zugeordneten Ladesäule 11_1, ..., 11_n anzuschließen. Die Ladesäulen 11_1, ..., 11_n stehen dabei in direkter Verbindung mit den jeweils ihnen zugeordneten Leistungselektroniken 12_1, ..., 12_n. Die Leistungselektroniken 12_1, ..., 12_n umfassen in der Regel, wie hier schematisch dargestellt, einen Gleichrichter, um Wechselspannung in Gleichspannung umzuwandeln, und einen dazu in Reihe geschalteten Gleichspannungswandler, um die umgewandelte Gleichspannung in eine für das angeschlossene und zu ladende Fahrzeug geeignete Gleichspannung umzuwandeln.

Die jeweiligen Ladepunkte 10_1, ..., 10_n sind über eine jeweilige Leitung 13_1, ..., 13_n mit einem ebenfalls von dem erfindungsgemäßen System umfassten überlastfähigen Transformator 14 verbunden. Der überlastfähige Transformator 14 ist dazu ausgelegt, eine Mittelspannung, die aus einem Mittelspannungsnetz 20 entnommen wird, in eine Niederspannung umzuwandeln und diese den jeweiligen Ladepunkten 10_1, ..., 10_n über die jeweiligen Leitungen 13_1, ..., 13_n zur Verfügung zu stellen. Dazu umfasst der Transformator 14 auf der Eingangsseite, d. h. auf der Seite in Richtung Mittelspannungsnetz 20, eine erste Wicklung 140 und auf Seiten der Ladepunkte 10_1, ..., 10_n eine Vielzahl von Sekundärwicklungen 14_1,..., 14_n. Das Verhältnis der Windungszahlen der jeweiligen Spulen bzw. Wicklungen an Eingangs- zu Ausgangsseite ist dabei so gewählt, dass die eingangsseitig empfangene Mittelspannung ausgangsseitig, d. h. in Richtung der Ladepunkte, einer geeigneten Niederspannung entspricht. Wie durch den parallel zur Primärwicklung 140 vorgesehenen Strich 141 angedeutet, ist der hier vorgesehene überlastfähige Transformator 14 galvanisch getrennt.

Der überlastfähige Transformator 14 bezieht seine Spannung über eine Schaltanlage 21 von einem Mittelspannungsnetz 20. Sowohl das Mittelspannungsnetz 20 als auch die Schaltanlage 21 werden in der Regel von einem Netzbetreiber des Mittelspannungsnetzes betrieben und sind unabhängig von dem System 1 bzw. dem Ladepark, der in der Regel von einem Ladeparkbetreiber betrieben wird. An einem Netzanknüpfungspunkt 15 in der Anbindung von Schaltanlage 21 zu Transformator 14 wird nunmehr auf Ladeparkseite über eine erste Überwachungseinheit 16, die über eine Verbindung 15_1 mit dem Netzanknüpfungspunkt 15 verbunden ist, zentral und/oder dezentral und kontinuierlich eine von den Ladepunkten zu einem jeweiligen Zeitpunkt gemeinsam aus dem Mittelspannungsnetz 20 bezogene Leistung überwacht. Die zu jeweiligen Zeitpunkten gemeinsam entnommene Leistung wird aufgenommen und die Werte in einem kontinuierlich zu aktualisierenden Diagramm 16_1 aufgezeichnet. Anhand der kontinuierlichen Aufzeichnungen der gemeinsam von den Ladepunkten entnommenen Leistung zu jeweiligen Zeitpunkten kann überprüft werden, wie groß eine mittlere Leistung ist bzw. sein wird, die in einem vorgegebenen Zeitintervall gemeinsam von den Ladepunkten von dem Mittelspannungsnetz 20 entnommen wird. Da seitens des Netzbetreibers des Mittelspannungsnetzes 20 in der Regel je nach Vertrag ein Zeitintervall vorgegeben wird, in welchem von dem Kunden, hier dem Ladeparkbetreiber, eine bestimmte Leistung zu einem festgesetzten Preis entnommen werden darf, kann über die erste Überwachungseinheit 16 entsprechend des von dem Netzbetreiber vorgegebenen Zeitintervalls, was in der Regel 15 Minuten beträgt, aufgezeichnet werden, welche gemeinsame Leistung zu einem jeweiligen Zeitpunkt innerhalb des vorgegebenen Zeitintervalls entnommen wird und darüber mittels einer Regeleinheit eine mittlere Leistung über das fest vorgegebene Zeitintervall eingeregelt werden, d. h. eine jeweils noch zulässig entnehmbare Leistung zu zukünftigen innerhalb des Zeitintervalls liegenden Zeitpunkten bestimmt werden, so dass die mittlere von den Ladepunkten gemeinsam entnommene Leistung nicht die maximal festgelegte Leistung, die von dem Netzbetreiber mit dem Ladeparkbetreiber vereinbart wurde, überschritten wird. Das bedeutet, dass die mittlere von den Ladepunkten in dem vorgegebenen Zeitintervall von 15 Minuten entnommene Leistung maximal der zwischen Ladeparkbetreiber und Mittelspannungsnetzbetreiber vereinbarten festgelegten maximalen Leistung für das vorgegebene Zeitintervall entspricht. Dadurch ist es möglich, dass zu einzelnen Zeitpunkten oder zu Teilzeitintervallen des vorgegebenen Zeitintervalls von bspw. 15 Minuten auch eine über der festgelegten maximalen Leistung liegende Leistung von den Ladepunkten entnommen werden kann, jedoch im Mittel über das vorgegebene Zeitintervall maximal die vorgegebene maximale festgelegte Leistung entnommen wird. Durch kontinuierliche Aufzeichnung der entnommenen Leistung durch die erste Überwachungseinheit 16 ist es möglich, die entnommene Leistung entsprechend zu steuern und über eine ferner vorgesehene Steuereinheit 18, die mit der ersten Überwachungseinheit 16 in kommunikativer Verbindung 17 steht, die einzelnen Ladepunkte 10_1, ..., 10_n über jeweilige Verbindungen 19_1, ..., 19_n zu den jeweiligen Leistungselektroniken 12_1, ..., 12_n mit Leistung zu versorgen. Jeweilige Leistungselektroniken 12_1, ..., 12_n wandeln dann die jeweiligen ihnen zugewiesenen und von dem Transformator 14 über die Leitung 13_1, ..., 13_n zur Verfügung gestellte Leistung in eine den Ladesäulen 11_1, ..., 11_n zur Verfügung zu stellende Leistung um. Die erste Überwachungseinheit 16 und die Steuereinheit 18 können dabei auch in einer Einheit implementiert sein. Ferner ist in der Regel die Regeleinheit, die dazu ausgelegt ist, eine mittlere von den Ladepunkten gemeinsam aus dem Mittelspannungsnetz bezogene Leistung jeweils über ein vorgegebenes Zeitintervall einzuregeln, mit der ersten Überwachungseinheit 16 gekoppelt und in der Regel in einer Einheit implementiert. Das bedeutet, dass in der Regel die erste Überwachungseinheit 16, die Regeleinheit sowie die Steuereinheit 18 auf einem Server abgelegt und betrieben werden.

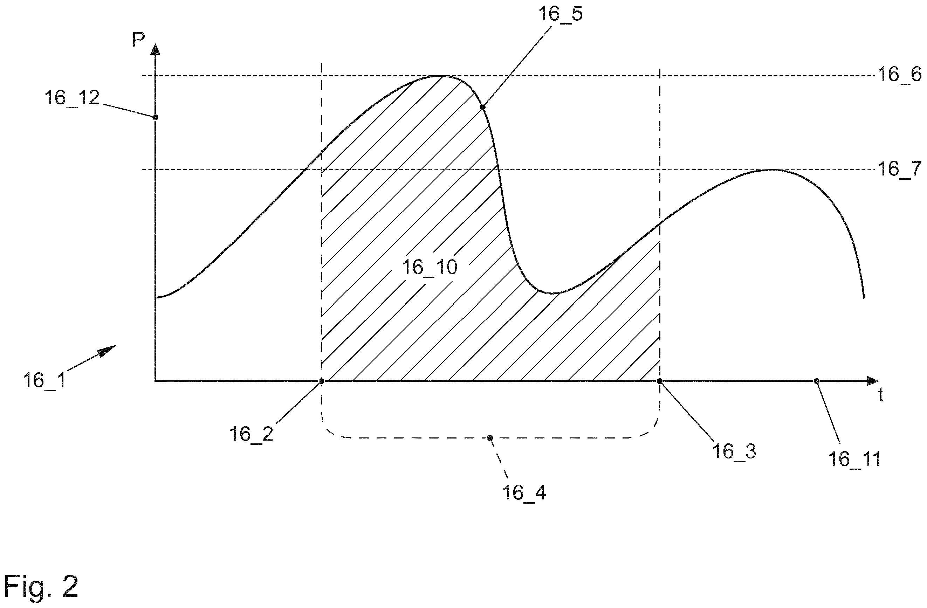

Figur 2 zeigt in schematischer Darstellung die von der ersten Überwachungseinheit 16 kontinuierlich aufgenommenen Werte als Überwachungsdiagramm 16_1. In dem Diagramm 16_1 ist auf einer Abszisse 16_11 die Zeit und auf einer Ordinate 16_12 die von dem Mittelspannungsnetz entnommene Leistung P aufgetragen. Die Zeit wird dabei in Minuten und die Leistung in der Regel in kVA bzw. kW aufgetragen. Das von dem Netzbetreiber des Mittelspannungsnetz vorgegebene Zeitintervall $t_{slot}$ 16_4 verläuft von einem Zeitpunkt $t_0$ 16_2 bis zu einem Zeitpunkt $t_1$ 16_3 und beträgt in der Regel 15 Minuten. Das Zeitintervall $t_{slot}$ 16_4 gibt dabei ein Zeitintervall an und damit eine Zeitdauer und ist nicht auf die fest vorgegebenen Zeitpunkte fokussiert, sondern beginnt dann bei Zeitpunkt $t_1$ neu zu laufen bis zu einem entsprechend von $t_1$ beabstandeten Zeitpunkt $t_2$. $t_0$ 16_2 ergibt sich bspw. als $t_0 = t_{Start} + (n*t_{slot})$, wobei n eine Anzahl von Messungen angibt. Die gezeichnete Kurve 16_5 gibt den Verlauf der gemeinsamen von allen Ladepunkten über den Transformator 14 von dem Mittelspannungsnetz 20 entnommenen Leistung an. Die Leistung $P_{max}$ 16_6 entspricht einer über die jeweiligen Leistungselektroniken 12_1, ..., 12_n den jeweiligen Ladesäulen 11_1, ..., 11_n zur Verfügung stellbaren Leistung, mit welcher ein Schnellladevorgang an einem jeweilig angeschlossenen Elektrofahrzeug vorgenommen werden kann. Die ferner angegebene Leistung $P_{Connection}$ 16_7 entspricht der festgelegten maximalen Leistung, die vertragsgemäß in dem Zeitintervall $t_{slot}$ 16_4 zu einem vereinbarten Preis im Mittel entnommen werden darf. Die im Mittel in dem fest vorgegebenen Zeitintervall $t_{slot}$ 16_4 entnommene Leistung kann berechnet werden durch

$$E_{slot} = \int_{t_0}^{t_1} P(t)dt.$$

Erfindungsgemäß ist nunmehr vorgesehen, dass die entnommene Leistung innerhalb des fest vorgegebenen Zeitintervalls $t_{slot}$ 16_4 kontinuierlich aufgenommen und überwacht wird, so dass die in dem Intervall insgesamt entnommene Energie $E_{slot}$ kleiner ist oder gleich als eine über die Zeitdauer $t_{slot}$ 16_4 entnehmbare Leistung $P_{Connection}$ 16_7, was demnach entspricht: $E_{slot} \leq P_{Connection}* t_{slot} * A$, wobei A einem Sicherheitsfaktor entspricht und im Bereich 0 und 1 liegt, d. h. $0 \leq A \leq 1$. Die insgesamt entnommene Leistung $E_{slot}$ entspricht hier dem schraffiert gekennzeichneten Flächenbereich 16_10. Durch eine derartige Ansteuerung kann gewährleistet werden, dass ein Schnellladen möglich ist und trotzdem im Mittel eine festgelegte maximale Leistung über ein vorgegebenes Zeitintervall nicht überschritten wird, so dass eine Lademöglichkeit unter Berücksichtigung einer, bspw. vertraglich, festgelegten Leistungsentnahme pro vorgegebenem Zeitintervall von einem Mittelspannungsnetz optimiert wird.

**Patentansprüche**

1. Verfahren zum Bereitstellen eines Ladeparks mit einer Mehrzahl von Ladepunkten (10_1 ..., 10_n), bei dem alle Ladepunkte (10_1, ..., 10_n) über einen gemeinsamen überlastfähigen Transformator (14) an ein Mittelspannungsnetz (20) angebunden werden, wobei ein Anschluss über das Mittelspannungsnetz auf mehr als 150 kW pro Ladepunkt (10_1, ..., 10_n) ausgelegt wird, wobei an jedem Ladepunkt (10_1, ..., 10_n) eine Leistungselektronik (12_1, ..., 12_n) vorgesehen wird, die dazu ausgelegt ist, einen Ladevorgang eines angeschlossenen und zu ladenden elektrisch angetriebenen Fahrzeugs durchzuführen, und an einem dem Transformator (14) in Richtung Mittelspannungsnetz (20) vorgeschalteten Netzanknüpfungspunkt (15) eine von den Ladepunkten (10_1, ..., 10_n) zu einem jeweiligen Zeitpunkt gemeinsam aus dem Mittelspannungsnetz (20) bezogene Leistung zentral und/oder dezentral und . kontinuierlich überwacht wird, wobei eine mittlere von den Ladepunkten (10_1, ..., 10_n) gemeinsam aus dem Mittelspannungsnetz (20) bezogene Leistung über ein vorgegebenes Zeitintervall (16_4) maximal auf eine für das vorgegebene Zeitintervall (16_4) festgelegte maximale Leistung (16_7) eingeregelt wird, wobei als vorgegebenes Zeitintervall (16_4) ein Abrechnungsintervall eines Netzbetreibers des Mittelspannungsnetzes (20) gewählt wird, **dadurch gekennzeichnet, dass**
die mittlere von den Ladepunkten (10_1, ..., 10_n) gemeinsam aus dem Mittelspannungsnetz (20) bezogene Leistung über das vorgegebene Zeitintervall (16_4) jeweils eihgeregelt wird, wobei in einem Teilintervall des vorgegebenen Zeitintervalls (16_4) oder an einzelnen Zeitpunkten des vorgegebenen Zeitintervalls (16_4) die gemeinsam von den Ladepunkten (10_1, ..., 10_n) entnommene Leistung aus dem Mittelspannungsnetz (20) die im Mittel maximal zulässige zu entnehmende Leistung (16_7) überschreiten darf, solange die mittlere über das vorgegebene Zeitintervall (16_4) entnommene Leistung die festgelegte maximale Leistung (16_7) nicht übersteigt, wobei eine dabei resultierende kurzzeitige Entnahme einer Mehrleistung durch den überlastfähigen Transformator (14) ermöglicht wird, der für diese Teilintervalle bzw. zu diesen Zeitpunkten kurzzeitig in Überlast betrieben wird, wobei die von den Ladepunkten (10_1, ..., 10_n) gemeinsam zu einem jeweiligen Zeitpunkt aus dem Mittelspannungsnetz (20) bezogene Leistung zentral und/oder dezentral und kontinuierlich überwacht und in Abhängigkeit von der für das vorgegebene Zeitintervall (16_4) festgelegten maximalen Leistung (16_7) für die mittlere von den Ladepunkten (10_1, ..., 10_n) gemeinsam aus dem Mittelspannungsnetz (20) bezogene Leistung jeweils dynamisch für zukünftige noch in dem vorgegebenen Zeitintervall (16_4) liegende Zeitpunkte eingestellt und auf die Mehrzahl von Ladepunkten (10_1, ..., 10_n) in Abhängigkeit von einem von diesen jeweils angeforderten Bedarf verteilt wird.

2. Verfahren nach Anspruch 1, bei dem als das vorgegebene Zeitintervall (16_4) ein Zeitintervall im Bereich von 5 bis 60 Minuten, insbesondere von 10 bis 30 Minuten, weiter insbesondere von 15 Minuten ausgewählt wird.

3. Verfahren nach Anspruch 1 oder 2, bei dem als die für das vorgegebene Zeitintervall (16_4) festgelegte maximale Leistung (16_7) eine von Seiten eines Ladeparkbetreibers beantragte Netzanschlussleistung gewählt wird.

4. Verfahren nach einem der voranstehenden Ansprüche, bei dem ein Berechnungsverfahren zur Bestimmung einer Überlastbarkeit des überlastfähigen Transformators (14) online mitläuft und zu einem jeweiligen Zeitpunkt freie Übertragungskapazitäten des Transformators (14) einer die jeweiligen Ladepunkte (10_1, ..., 10_n) ansteuernden Steuereinheit (18)mitgeteilt werden.

5. System zum Versorgen eines Ladeparks mit einer Mehrzahl von Ladepunkten (10_1, ..., 10_n) mit elektrischer Leistung, wobei ein Anschluss über ein Mittelspannungsnetz auf mehr als 150 kW pro Ladepunkten (10_1, ..., 10_n) ausgelegt ist, wobei an jedem Ladepunkt (10_1, ..., 10_n) eine Leistungselektronik (12_1, ..., 12_n) vorgesehen ist, die dazu ausgelegt ist, einen Ladevorgang eines angeschlossenen und zu ladenden elektrisch angetriebenen Fahrzeugs durchzuführen, wobei das System (1) mindestens umfasst: einen überlastfähigen Transformator (14), über den alle Ladepunkte (10_1, ..., 10_n) an das Mittelspannungsnetz (20) ankoppelbar sind, eine erste Überwachungseinheit (16), die an einem dem Transformator (14) in Richtung Mittelspannungsnetz (20) vorgeschalteten Netzanknüpfungspunkt (15) angeordnet ist und dazu konfiguriert ist, eine von den Ladepunkten (10_1, ..., 10_n) zu einem jeweiligen Zeitpunkt gemeinsam aus dem Mittelspannungsnetz (20) bezogene Leistung zentral und/oder dezentral und kontinuierlich zu überwachen, wobei eine mittlere von den Ladepunkten (10_1, ..., 10_n) gemeinsam aus dem Mittelspannungsnetz (20) bezogene Leistung über ein vorgegebenes Zeitintervall (16_4) maximal auf eine für das vorgegebene Zeitintervall (16_4) festgelegte maximale Leistung (16_7) eingeregelt wird, wobei als vorgegebenes Zeitintervall (16_4) ein Abrechnungsintervall eines Netzbetreibers des Mittelspannungsnetzes (20) gewählt wird, **dadurch gekennzeichnet, dass**
das System (1) eine Regeleinheit umfasst, die dazu ausgelegt ist, die mittlere von den Ladepunkten (10_1, ..., 10_n) gemeinsam aus dem Mittelspannungsnetz (20) bezogene Leistung jeweils über das vorgegebene Zeitintervall (16_4) einzuregeln, wobei in einem Teilintervall des vorgegebenen Zeitintervalls (16_4) oder an einzelnen Zeitpunkten des vorgegebenen Zeitintervalls (16_4) die gemeinsam von den Ladepunkten (10_1, ..., 10_n) entnommene Leistung aus dem Mittelspannungsnetz (20) die im Mittel maximal zulässige zu entnehmende Leistung (16_7) überschreiten darf, solange die mittlere über das vorgegebene Zeitintervall (16_4) entnommene Leistung die festgelegte maximale Leistung (16_7) nicht übersteigt, wobei eine dabei resultierende kurzzeitige Entnahme einer Mehrleistung durch den überlästfähigen Transformator (14) ermöglicht wird, der für diese Teilintervalle bzw. zu diesen Zeitpunkten kurzzeitig in Überlast betrieben wird, wobei die von den Ladepunkten (10_1, ..., 10_n) gemeinsam zu einem jeweiligen Zeitpunkt aus dem Mittelspannungsnetz (20) bezogene Leistung zentral und/oder dezentral und kontinuierlich überwacht und in Abhängigkeit von der für das vorgegebene Zeitintervall (16_4) festgelegten maximalen Leistung (16_7) für die mittlere von den Ladepunkten (10_1, ..., 10_n) gemeinsam aus dem Mittelspannungsnetz (20) bezogene Leistung jeweils dynamisch für zukünftige noch in dem vorgegebenen Zeitintervall (16_4) liegende Zeitpunkte eingestellt und auf die Mehrzahl von Ladepunkten (10_1, ..., 10_n) in Abhängigkeit von einem von diesen jeweils angeforderten Bedarf verteilt wird.

6. System nach Anspruch 5

   das ferner eine Steuereinheit (18) umfasst, die dazu konfiguriert ist, die jeweiligen Ladepunkte (10_1, ..., 10_n) des Ladeparks anzusteuern und die über den Transformator (14) aus dem Mittelspannungsnetz (20) bereitgestellte elektrische Leistung auf die Mehrzahl von Ladepunkten (10_1, ..., 10_n) in Abhängigkeit von einem von diesen jeweils angeforderten Bedarf zu verteilen.

7. nach Anspruch 6,

   das ferner eine zweite Überwachungseinheit umfasst, die dazu konfiguriert ist, ein Berechnungsverfahren zur Bestimmung einer Überlastbarkeit des überlastfähigen Transformators (14) bei Betrieb des Transformators (14) durchzuführen und zu einem jeweiligen Zeitpunkt freie Übertragungskapazitäten des Transformators (14) der die jeweiligen Ladepunkte (10_1, ..., 10_n) ansteuernden Steuereinheit (18) mitzuteilen.

**Claims**

1. Method for providing a charging park having a plurality of charging points (10_1, ..., 10_n), in which method all of the charging points (10_1, ..., 10_n) are connected to a medium-voltage grid (20) by means of a common transformer (14) with overloading capability, wherein a connection by means of the medium-voltage grid is designed for more than 150 kW per charging point (10_1, ..., 10_n), wherein a power electronics system (12_1, ..., 12_n) is provided at each charging point (10_1, ..., 10_n), which power electronics system is designed to perform a charging operation of a connected electrically driven vehicle that is to be charged, and a power drawn from the medium-voltage grid (20) jointly by the charging points (10_1, ..., 10_n) at a respective time is monitored centrally and/or decentrally and continuously at a grid contact point (15) connected upstream of the transformer (14) in the direction of the medium-voltage grid (20), wherein an average power drawn from the medium-voltage grid (20) jointly by the charging points (10_1, ..., 10_n) is in each case adjusted over a prescribed time interval (16_4) at the maximum to a maximum power (16_7) established for the prescribed time interval (16_4), wherein a billing interval of a grid operator of the medium-voltage grid (20) is selected as the prescribed time interval (16_4),

   **characterized in that**

   the average power drawn from the medium-voltage grid (20) jointly by the charging points (10_1, ..., 10_n) is in each case adjusted over the prescribed time interval (16_4), wherein, in a partial interval of the prescribed time interval (16_4) or at individual times of the prescribed time interval (16_4), the power withdrawn from the medium-voltage grid (20) jointly by the charging points (10_1, ..., 10_n) can exceed the average maximum permissible power (16_7) to be withdrawn as long as the average power withdrawn over the prescribed time interval (16_4) does not exceed the established maximum power (16_7), wherein a temporary withdrawal of an increased power that results here is furthermore also made possible by the transformer (14) with overloading capability, which is operated temporarily in overload for these partial intervals or at these times, wherein the power drawn from the medium-voltage grid (20) jointly by the charging points (10_1, ..., 10_n) at a respective time is monitored centrally and/or decentrally and continuously and is adjusted in each case dynamically for future times still located in the prescribed time interval (16_4) for the average power drawn from the medium-voltage grid (20) jointly by the charging points (10_1, ..., 10_n) depending on the maximum power (16_7) established for the prescribed time interval (16_4) and is distributed across the plurality of charging points (10_1, ..., 10_n) depending on a demand required in each case from said charging points.

2. Method according to Claim 1, in which a time interval in the range of from 5 to 60 minutes, particularly of from 10 to 30 minutes, more particularly of 15 minutes, is selected as the prescribed time interval (16_4).

**3.** Method according to Claim 1 or 2, in which a grid connection power requested by a charging park operator is selected as the maximum power (16_7) established for the prescribed time interval (16_4).

**4.** Method according to one of the preceding claims, in which a calculation method for determining an overloading capability of the transformer (14) with overloading capability runs along online and, at a respective time, free overloading capabilities of the transformer (14) are communicated to a control unit (18) that actuates the respective charging points (10_1, ..., 10_n).

**5.** System for supplying electrical power to a charging park having a plurality of charging points (10_1, ..., 10_n), wherein a connection by means of a medium-voltage grid is designed for more than 150 kW per charging point (10_1, ..., 10_n), wherein a power electronics system (12_1, ..., 12_n) is provided at each charging point (10_1, ..., 10_n), which power electronics system is designed to perform a charging operation of a connected electrically driven vehicle that is to be charged, wherein the system (1) comprises at least: one transformer (14) with overloading capability, by means of which all of the charging points (10_1, ..., 10_n) can be coupled to the medium-voltage grid (20), a first monitoring unit (16), which is arranged at a grid contact point (15) connected upstream of the transformer (14) in the direction of the medium-voltage grid (20) and is configured to monitor a power drawn from the medium-voltage grid (20) jointly by the charging points (10_1, ..., 10_n) at a respective time centrally and/or decentrally and continuously, wherein an average power drawn from the medium-voltage grid (20) jointly by the charging points (10_1, .. ., 10_n) is adjusted over a prescribed time interval (16_4) at the maximum to a maximum power (16_7) established for the prescribed time interval (16_4), wherein a billing interval of a grid operator of the medium-voltage grid (20) is selected as the prescribed time interval (16_4),
**characterized in that**
the system (1) comprises a regulating unit, which is designed to adjust the average power drawn from the medium-voltage grid (20) jointly by the charging points (10_1, ..., 10_n) in each case over the prescribed time interval (16_4), wherein, in a partial interval of the prescribed time interval (16_4) or at individual times of the prescribed time interval (16_4), the power withdrawn from the medium-voltage grid (20) jointly by the charging points (10_1, ..., 10_n) can exceed the average maximum permissible power (16_7) to be withdrawn as long as the average power withdrawn over the prescribed time interval (16_4) does not exceed the established maximum power (16_7), wherein a temporary withdrawal of an increased power that results here is furthermore also made possible by the transformer (14) with overloading capability, which is operated temporarily in overload for these partial intervals or at these times, wherein the power drawn from the medium-voltage grid (20) jointly by the charging points (10_1, ..., 10_n) at a respective time is monitored centrally and/or decentrally and continuously and is adjusted in each case dynamically for future times, still located in the prescribed time interval (16_4) for the average power drawn from the medium-voltage grid (20) jointly by the charging points (10_1, ..., 10_n) depending on the maximum power (16_7) established for the prescribed time interval (16_4) and is distributed across the plurality of charging points (10_1, ..., 10_n) depending on a demand required in each case from said charging points.

**6.** System according to Claim 5, which also comprises a control unit (18), which is configured to actuate the respective charging points (10_1, ..., 10_n) of the charging park and to distribute the electrical power provided from the medium-voltage grid (20) by means of the transformer (14) across the plurality of charging points (10_1, ..., 10_n) depending on a demand requested by said charging points.

**7.** System according to Claim 6, which also comprises a second monitoring unit; which is configured to carry out a calculation method for determining an overloading capability of the transformer (14) with overloading capability during operation of the transformer (14) and, at a respective time, to communicate free overloading capabilities of the transformer (14) to the control unit (18) that actuates the respective charging points (10_1, ..., 10_n).

## Revendications

**1.** Procédé de fourniture d'un parc de charge pourvu d'une pluralité de bornes de recharge (10_1, ..., 10_n), dans lequel toutes les bornes de recharge (10_1, ..., 10_n) sont branchées sur un réseau tension moyenne (20) par l'intermédiaire d'un transformateur à capacité de surcharge (14) commun, une connexion par l'intermédiaire du réseau moyenne tension étant conçue pour plus de 150 kW par borne de recharge (10_1, ..., 10_n), dans lequel, à chaque borne de recharge (10_1, ..., 10_n), une électronique de puissance (12_1, ..., 12_n) est prévue qui est conçue pour effectuer un processus de charge d'un véhicule électrique connecté et à recharger, et à un point de liaison au réseau (15) en amont du transformateur (14) en direction du réseau tension moyenne (20), une puissance, obtenue en commun par les bornes de recharge (10_1, ..., 10_n) à partir du réseau moyenne tension (20) à un instant respectif, est surveillée de manière centralisée et/ou décentralisée et en continu, dans lequel une puissance moyenne, obtenue en commun par les bornes de recharge (10_1, ..., 10_n) à partir du réseau tension moyenne (20) pendant un intervalle de temps prédéfini (16_4), est réglée au maximum sur une puissance maximale (16_7) définie pour l'intervalle de temps prédéfini (16_4), un intervalle de facturation d'un opérateur de réseau du réseau moyenne tension (20) étant choisi comme intervalle de temps prédéfini (16_4),

**caractérisé en ce que** la puissance moyenne, obtenue en commun par les bornes de recharge (10_1, ..., 10_n) à partir du réseau moyenne tension (20), est réglée respectivement pendant l'intervalle de temps prédéfini (16_4), dans lequel, dans un intervalle partiel de l'intervalle de temps prédéfini (16_4) ou à des instants individuels de l'intervalle de temps prédéfini (16_4), la puissance, prélevée en commun par les bornes de recharge (10_1, ..., 10_n) sur le réseau moyenne tension (20), peut dépasser la puissance (16_7) à prélever admissible maximale en moyenne tant que la puissance prélevée moyenne pendant l'intervalle de temps prédéfini (16_4) ne dépasse pas la puissance maximale définie (16_7), un bref prélèvement d'une puissance supplémentaire qui en résulte étant rendu possible par le transformateur à capacité de surcharge (14) qui est exploité brièvement en surcapacité pour ces intervalles partiels ou à ces instants, dans lequel la puissance, obtenue en commun par les bornes de recharge (10_1, ..., 10_n) à un instant respectif à partir du réseau moyenne tension (20), est surveillée de manière centralisée et/ou décentralisée et en continu, et est réglée en fonction de la puissance maximale (16_7) définie pour l'intervalle de temps prédéfini (16_4), pour la puissance moyenne obtenue en commun par les bornes de recharge (10_1, ..., 10_n) à partir du réseau moyenne tension (20), respectivement de manière dynamique pour des instants futurs toujours compris dans l'intervalle de temps prédéfini (16_4), et est répartie sur la pluralité de bornes de recharge (10_1, ..., 10_n) en fonction d'une demande sollicitée respectivement par ceux-ci.

2. Procédé selon la revendication 1, dans lequel un intervalle de temps dans la plage de 5 à 60 minutes, en particulier de 10 à 30 minutes, de plus grande préférence de 15 minutes, est sélectionné comme intervalle de temps prédéfini (16_4).

3. Procédé selon la revendication 1 ou 2, dans lequel une puissance de connexion au réseau demandée de la part d'un opérateur de parc de charge est sélectionnée comme puissance maximale (16_7) définie pour l'intervalle de temps prédéfini (16_4).

4. Procédé selon l'une quelconque des revendications précédentes, dans lequel un procédé de calcul pour déterminer une capacité de surcharge du transformateur (14) à capacité de surcharge est accessible en ligne en permanence, et à un instant respectif, des capacités de transmission libres du transformateur (14) sont communiquées à une unité de commande (18) pilotant les bornes de recharge (10_1, ..., 10_n) respectives.

5. Système permettant d'alimenter en puissance électrique un parc de charge pourvu d'une pluralité de bornes de recharge (10_1, ..., 10_n), une connexion par l'intermédiaire d'un réseau moyenne tension étant conçue pour plus de 150 kW par borne de recharge (10_1, ..., 10_n), dans lequel, à chaque borne de recharge (10_1, ..., 10_n), une électronique de puissance (12_1, ..., 12_n) est prévue qui est conçue pour effectuer un processus de charge d'un véhicule électrique connecté et à recharger, le système (1) comprenant au moins : un transformateur (14) à capacité de surcharge par lequel toutes les bornes de recharge (10_1, ..., 10_n) peuvent être couplées au réseau moyenne tension (20), une première unité de surveillance (16) qui est disposée à un point de liaison au réseau (15) en amont du transformateur (14) en direction du réseau moyenne tension (20), et qui est configurée pour surveiller de manière centralisée et/ou décentralisée et en continu une puissance obtenue en commun par les bornes de recharge (10_1, ..., 10_n) à un instant respectif à partir du réseau moyenne tension (20), dans lequel une puissance moyenne, obtenue en commun par les bornes de recharge (10_1, ..., 10_n) à partir du réseau tension moyenne (20), est réglée pendant un intervalle de temps prédéfini (16_4) au maximum sur une puissance maximale (16_7) définie pour l'intervalle de temps prédéfini (16_4), un intervalle de facturation d'un opérateur de réseau du réseau moyenne tension (20) étant choisi comme intervalle de temps prédéfini (16_4),

**caractérisé en ce que** le système (1) comprend une unité de réglage qui est conçue pour régler la puissance moyenne obtenue en commun par les bornes de recharge (10_1, ..., 10_n) à partir du réseau moyenne tension (20) respectivement pendant l'intervalle de temps prédéfini (16_4), dans lequel, dans un intervalle partiel de l'intervalle de temps prédéfini (16_4) ou à des instants individuels de l'intervalle de temps prédéfini (16_4), la puissance prélevée en commun par les bornes de recharge (10_1, ..., 10_n) sur le réseau moyenne tension (20) peut dépasser la puissance (16_7) à prélever admissible maximale en moyenne tant que la puissance moyenne prélevée sur l'intervalle de temps prédéfini (16_4) ne dépasse pas la puissance maximale définie (16_7), un bref prélèvement d'une puissance supplémentaire qui en résulte étant rendu possible par le transformateur à capacité de surcharge (14) qui est exploité brièvement en surcapacité pour ces intervalles partiels ou à ces instants, dans lequel la puissance, obtenue en commun par les bornes de recharge (10_1, ..., 10_n) à un instant respectif à partir du réseau moyenne tension (20), est surveillée de manière centralisée et/ou décentralisée et en continu, et est réglée en fonction de la puissance maximale (16_7) définie pour l'intervalle de temps prédéfini (16_4), pour la puissance moyenne obtenue en commun par les bornes de recharge (10_1, ..., 10_n) à partir du réseau moyenne tension (20), respectivement de manière dynamique pour des instants futurs toujours compris dans l'intervalle de temps prédéfini (16_4), et est répartie sur la pluralité de bornes de recharge (10_1, ..., 10_n) en fonction d'une demande sollicitée respectivement par ceux-ci.

6. Système selon la revendication 5, comprenant en outre une unité de commande (18) qui est configurée pour piloter les bornes de recharge (10_1, ..., 10_n) respectives du parc de charge et pour répartir la puissance électrique fournie par l'intermédiaire du transformateur (14) à partir du réseau moyenne tension (20) sur la pluralité de bornes de recharge (10_1, ..., 10_n) en fonction d'une demande sollicitée respectivement par ceux-ci.

7. Système selon la revendication 6, comprenant en outre une deuxième unité de surveillance qui est configurée pour effectuer un procédé de calcul pour déterminer une capacité de surcharge du transformateur (14) à capacité de surcharge lorsque le transformateur (14) fonctionne, et pour communiquer à un instant respectif des capacités de transmission libres du transformateur (14) à une unité de commande (18) pilotant les bornes de recharge (10_1, ..., 10_n) respectives.

Fig. 1

Fig. 2

EP 3 489 076 B1

**IN DER BESCHREIBUNG AUFGEFÜHRTE DOKUMENTE**

**In der Beschreibung aufgeführte Patentdokumente**

- US 20140089016 A
- DE 102015110023 A1
- DE 102015224075 A1
- US 20150314696 A1